# EUROPÄISCHE PATENTSCHRIFT

(11) **EP 0 684 061 B1**
(45) Veröffentlichungstag und Bekanntmachung des Hinweises auf die Patenterteilung: **15.03.2000**
(21) Anmeldenummer: 95105799.1
(22) Anmeldetag: 19.04.1995
(51) Int. Cl.: B01D 25/133, B01D 25/176

(54) **Filterplatte für eine Plattenfilterpresse**
Filter plate for a plate filter press
Plaque de filtration pour un filtre à plaques

(30) Priorität: 30.04.1994 DE 4415274
(43) Veröffentlichungstag der Anmeldung: 29.11.1995
(73) Patentinhaber: JV KUNSTSTOFFWERK GMBH, D-91166 Georgensgmünd (DE)
(72) Erfinder: Hermann, Manfred P., Dr., D-90491 Nürnberg (DE); Bonn, Heinz, D-90491 Nürnberg (DE)
(74) Vertreter: KEIL & SCHAAFHAUSEN

(56) Entgegenhaltungen:
- EP-A- 0 208 076
- EP-A- 0 247 288
- WO-A-92/06760
- DE-A- 3 414 550
- DE-A- 3 540 786
- DE-A- 4 118 620

## Beschreibung

Die Erfindung betrifft eine Filterplatte nach dem Oberbegriff des Anspruchs 1.

Filterplatten mit Preßmembran sind grundsätzlich bekannt. Problematisch ist hierbei die Verbindung zwischen Preßmembran und Plattenkörper,weil während des Preßvorgangs ein Druckmittel zwischen Plattenkörper und Preßmembran eingeführt wird, durch das die Preßmembran vom Plattenkörper abgehoben wird. Während die Preßmembran im Randbereich der Filterplatte auch durch den Schließdruck an der Filterplatte gehalten wird, stellt die Festlegung im Bereich der Durchtrittsöffnung, insbesondere im Bereich des Trübekanals, ein Problem dar. Die Befestigung in diesem Bereich erfolgte bisher bspw. durch einfaches Verkleben oder Vulkanisieren der Ränder der Preßmembran mit dem Plattenkörper. Das Verkleben ist jedoch nicht sehr zuverlässig, weil beim Preßvorgang starke Scherkräfte auftreten, durch die die Klebverbindung gelöst werden kann, zumal im Gegensatz zur Befestigung der Membranränder am äußeren Plattenrand die Verbindung der Preßmembran mit dem Plattenkörper im Bereich des Trübeeintritts nicht durch die Schließkraft der Presse unterstützt wird, so daß die Klebverbindung in diesem Bereich einer starken Belastung unterworfen ist.

Aus der DE PS 23 24 876 ist es bekannt, die Durchtrittsbohrung der mit Preßmembranen versehenen Filterplatte mit einer im Bereich der Filterplattenmittelebene umlaufenden Nut zu versehen. In diese umlaufende Nut wird der Randwulst der Preßmembran eingelegt und darüber ein geschlitzter Sprengring geschoben. Dieser Sprengring wird dann durch einen geschlossenen Ring als Stützring durch Verrastung gehalten. Eine derartige Befestigung erlaubt keine sehr hohen Preßdrücke. Diese lassen sich dann erreichen, wenn statt des Stützringes eine Befestigung vorgesehen wird, wie sie als sogenannte Tuchverschraubung bekannt ist. Die Einschraubflansche, die durch eine eingeschraubte Gewindebüchse gegeneinander verschraubt werden und hierbei auch das Filtertuch einklemmen, haben sich in der Praxis zwar bewährt, weisen jedoch den Nachteil auf, daß derart ausgerüstete Filterpressen bei der Behandlung von aggressiven Trüben nur beschränkt einsatzfähig sind. Eine Druckbeaufschlagung der Preßmembran mit einem Preßdruck bis zu 3 bar ist möglich. Bei der Verwendung höherer Drucke besteht auch hier die Gefahr, daß die Preßmembran aus ihrer Verankerung herausgezogen wird.

Die DE-A 40 32 937 (WO-A 92/06760) beschreibt eine Filterplatte für Plattenfilterpressen, bei der eine sichere Verankerung der Preßmembran im Bereich der Durchtrittsöffnung der Filterplatte auch bei höheren Drücken dadurch gewährleistet werden soll, daß die Durchtrittsöffnung der Filterplatte auf der die Preßmembran tragenden Seite zur Mittelebene der Filterplatte hin konisch zulaufend ausgebildet ist, daß die Nut zur Aufnahme des Randwulstes der Preßmembran in dem konisch zulaufenden Bereich angeordnet ist und daß der Randwulst der Preßmembran durch einen am Außenumfang konisch geformten Klemmring in der Nut der Filterplatte gehalten wird. Die an dem Randwulst der Preßmembran anliegende Außenfläche des Klemmrings ist dabei entsprechend der Konizität der Durchtrittsöffnung der Filterplatte von der Mittelebene der Filterplatte weggeneigt. Bei Druckbeaufschlagung der Preßmembran wird diese in axialer Richtung von der Filterplatte weg und daher gegen die konische Anlagefläche des Klemmrings gedrückt. Um ein Herausrutschen der Preßmembran aus der Nut der Filterplatte zu verhindern, ist der Klemmring über Spannschrauben mit einem Haltesteg der Filterplatte fest verspannt. Eine Axialbewegung des Klemmrings wird dadurch trotz der über den Pressdruck aufgebrachten Kraft verhindert und der Randwulst in der Nut gehalten. Die Befestigung des Klemmrings ist jedoch sehr aufwendig, da mehrere Schrauben über den Umfang des Klemmrings verteilt angebracht und fest mit dem Haltesteg verspannt werden müssen. Da die zu behandelnden Flüssigkeiten zudem häufig stark korrosiv wirken, müssen die Befestigungsschrauben gegenüber dem Trübekanal hermetisch abgedichtet werden, wodurch der Herstellungs- und Montageaufwand zusätzlich vergrößert wird.

Aufgabe der Erfindung ist es daher, eine Filterplatte der gattungsgemäßen Art derart weiterzubilden, daß bei weiterhin gewährleisteter Abdichtung der Preßmembran gegenüber der Filterplatte eine einfachere Herstellung und Montage der Filterpresse ermöglicht wird.

Diese Aufgabe wird mit der Erfindung im wesentlichen die Merkmale des Anspruchs 1 gelöst. Durch die entgegengesetzt zu der aus der DE-A 40 32 937 bekannten Filterplatte geneigte Anlagefläche des Klemmrings wird vermieden, daß der Klemmring beim Aufblähen der Preßmembran unter Abpreßdruck axial belastet und von der Filterplatte weggedrückt wird. Beim Abpressen wird die Membran aufgebläht und der Randwulst keilförmig in den Spalt zwischen Filterplatte und Klemmring gezogen und dichtet auch bei hohem Abpreßdruck ab. Dabei wirken die Kräfte lediglich radial auf den Klemmring, so daß keine aufwendigen Befestigungsmittel vorgesehen werden müssen, um eine Axialbewegung des Klemmrings, durch die die Preßmembran freigegeben würde und aus der Nut herausrutschen könnte, zu verhindern.

Vorzugsweise beträgt die Neigung der Anlagefläche höchstens 10°, vorzugsweise höchstens 5°, da hierdurch eine ausreichende Abdichtung auch bei aufgeblähter Membran gewährleistet werden kann.

Bei einer bevorzugten Ausgestaltung der Erfindung ist an der Anlagefläche des Klemmrings ein vorzugsweise umlaufender Vorsprung ausgebildet, der in eine entsprechende Ausnehmung in dem Randwulst der Preßmembran eingreift. Dadurch wird der Klemmring an einer Axialbewegung gehindert, so daß auf zusätzliche Befestigungsmittel vollständig verzichtet werden kann. Der in die Ausnehmung in dem Randwulst der Preßmembran eingreifende Vorsprung reicht zur axialen Festlegung des Klemmrings aus, da auf diesen keine großen axialen Kräfte wirken.

In Weiterbildung des Erfindungsgedankens ist die den Randwulst aufnehmende Nut in der Filterplatte trapezförmig ausgebildet, wobei eine Grundfläche der Nut im wesentlichen parallel zu der Achse der Durchtrittsöffnung verläuft. Dadurch wird ein Herausrutschen des Randwulstes der Preßmembran aus der Nut der Filterplatte zuverlässig verhindert.

Bei einer bevorzugten Ausführungsform der Erfindung ist an der Filterplatte im Bereich ihrer Mittelebene ein die Nut zur Mitte der Durchtrittsöffnung hin überragender umlaufender Haltesteg vorgesehen, an dem der Klemmring befestigbar ist.

Da auf den Klemmring lediglich radiale Kräfte wirken, kann dieser erfindungsgemäß mittels eines Klippverschlußes an der Filterplatte befestigt werden, so daß eine einfache und schnelle Montage möglich ist.

Eine noch einfachere und schnellere Montage wird bei einer bevorzugten Ausführungsform der Erfindung dadurch erreicht, daß der Klemmring als durchgehendes Rohr ausgebildet ist. Damit sind keine korrosionsanfälligen Stahlelemente oder dgl. mehr erforderlich, um zwei Ringe oder Ringelemente zusammenzuhalten. Zudem wird die Verschraubung gespart.

Da der Klemmring keine großen Kräfte aufnehmen muß, besteht er erfindungsgemäß aus Kunststoff, wobei zur Gewährleistung der erforderlichen Beständigkeit gegenüber der aggressiven Trübe bspw. Polypropylen verwendet wird.

Weiterbildungen, Vorteile und Anwendungsmöglichkeiten der Erfindung ergeben sich aus der nachfolgenden Beschreibung von Ausführungsbeispielen und der Zeichnung.

Es zeigen:
- Fig. 1: einen Teilschnitt durch eine Membranfilterplatte im Bereich der Durchtrittsöffnung,
- Fig. 2: einen vergrößerten Ausschnitt der Filterplatte im Bereich der Befestigung der Preßmembran mit einem anders ausgebildeten Klemmring,
- Fig. 3: eine analoge Darstellung zu Fig. 2 mit einer weiteren Ausführungsform des Klemmrings,
- Fig. 4: einen Teilschnitt durch eine weitere Membranfilterplatte im Bereich der Durchtrittsöffnung, und
- Fig. 5: einen Teilschnitt durch eine Membranfilterplatte mit einer anderen Ausführung des Klemmrings.

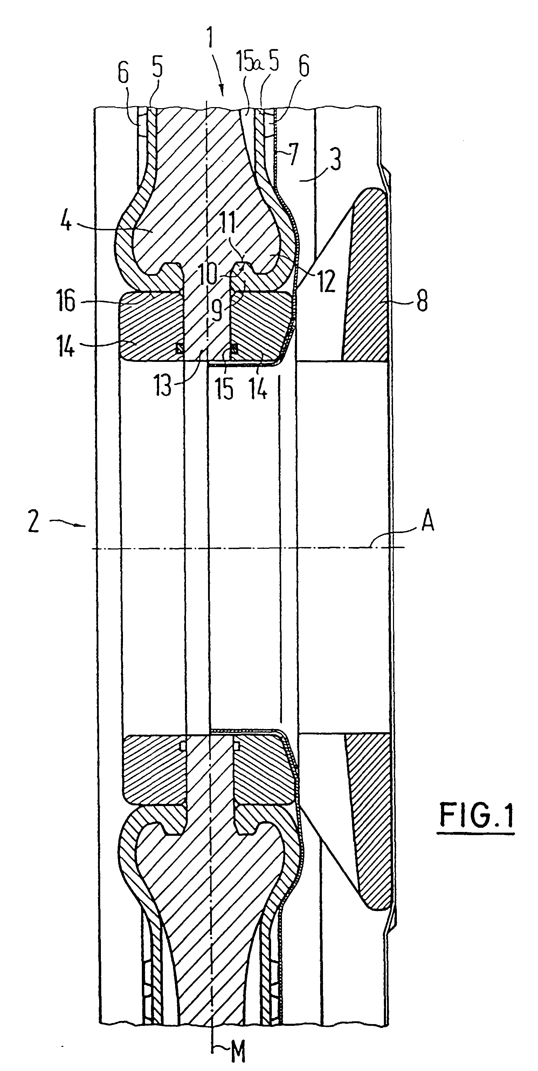

In dem Teilschnitt gemäß Fig. 1 ist der Bereich des Trübedurchtritts einer Filterplatte 1 dargestellt. Bei üblichen Filterplattenanordnungen wird eine Membranfilterplatte 1 zwischen in der Zeichnung nicht näher dargestellten Kammerfilterplatten angeordnet, wobei gegebenenfalls eine Vielzahl dieser Filterplatten hintereinander angeordnet sind. Die Filterplatten weisen bspw. in ihrer Mitte eine Trübedurchtrittsöffnung 2 auf, zu deren Achse A sie rotationssymmetrisch ausgebildet sind. Bei zum Paket zusammengeschobenen Filterplatten bilden daher die Durchtrittsöffnungen 2 der aufeinanderfolgenden Filterplatten einen Trübekanal, von dem aus die Trübe in die einzelnen zwischen den Platten liegenden Filterkammern 3 eintreten kann.

Die Filterplatte 1 weist einen Grundkörper 4 auf, auf dessen beiden Seiten je eine Preßmembran 5 angeordnet ist, die auf ihrer der Filterkammer 3 zugewandten Seite eine Vielzahl von Noppen 6 aufweist. Auf der Preßmembran 5 liegt ein Filtertuch 7 auf, das sich auf den Noppen 6 abstützt. Das Filtertuch 7 ist in Fig. 1 lediglich auf einer Seite der Filterplatte 1 als Überhangtuch dargestellt, das über einen Flansch 8 verschraubt ist. Die Erfindung läßt sich aber ebensogut bei Durchstecktüchern ohne Tuchverschraubung einsetzen. Die Preßmembran 5 und das Filtertuch 7 sind auf der in der Zeichnung nicht dargestellten Außenseite der Filterplatte 1 in üblicher Weise befestigt. Die Preßmembran 5 und das Filtertuch 7 weisen der Durchtrittsöffnung 2 der Filterplatte 1 entsprechende Durchtrittsöffnungen auf.

Die Preßmembran 5 ist an dem Rand der Durchtrittsöffnung 4 mit einem umlaufenen Randwulst 9 versehen, der in eine Nut 10 des Grundkörpers 4 eingreift. Die Nut 10 ist trapezförmig ausgebildet, wobei eine Grundfläche 11 parallel zu der Achse A der Durchtrittsöffnung 2 angeordnet ist. Der Randwulst 9 der Preßmembran 5 ist etwa der Form der Nut 10 angepaßt, und die Preßmembran 5 erstreckt sich über einen abgerundeten Umlenkbereich 12 des Grundkörpers 4 zum nicht dargestellten Randbereich der Filterplatte 1.

Der Grundkörper 4 der Filterplatte 1 weist einen die Nuten 10 zur Mitte der Durchtrittsöffnung 2 hin überragenden Haltesteg 13 auf, der die Nuten 10 voneinander trennt. Auf dem Haltesteg 13 ist ein Klemmring 14 angeordnet, der die Randwülste 9 der Preßmembran 5 in den Nuten 10 hält. Der Klemmring 14 besteht aus Kunststoff, bspw. Polypropylen, und ist bspw. über einen Klippverschluß an dem Haltesteg 13 befestigt. Der Klemmring 14 kann außerdem über O-Ringe 15 gegenüber dem Haltesteg 13 abgedichtet werden.

Die Preßmembran 5 muß gegenüber der Filterplatte 1 abgedichtet sein, wobei die Abdichtung im nicht dargestellten Randbereich der Filterplatte 1 kein Problem darstellt, da die Preßmembran 5 dort auch durch den Schließdruck an der Filterplatte 1 gehalten wird. Im Bereich der Durchtrittsöffnung 2 ist die Abdichtung dagegen problematischer. So muß sowohl bei Filtrationsdruck, d.h. einem in der Filterkammer 3 bei entspannter Preßmembran 5 aufgebrachtem Druck, als auch bei Abpreßdruck, d.h. Druck in einem Raum 15a zwischen dem Grundkörper 4 und der dann aufgeblähten Preßmembran 5, eine Abdichtung gewährleistet sein, ohne daß der Randwulst 9 der Preßmembran 5 aus der Nut 10 herausrutscht.

Bei Filtrationsdruck erfolgt die Abdichtung über den Randwulst 9, der über den Klemmring 14 in der Nut 10 gehalten wird. Beim Aufblähen der Preßmembran 5 unter Abpreßdruck muß verhindert werden, daß der Randwulst 9 aus der Nut 10 des Grundkörpers 4 herausrutscht. Beim Aufblähen der Preßmembran 5 wird der Randwulst 9 keilförmig in den Spalt zwischen Klemmring 14 und Umlenkbereich 12 des Grundkörpers 4 gezogen und dichtet auch bei hohem Abpreßdruck ab, da der Dichtdruck parallel zum Abpreßdruck steigt. Hierbei wirken auf den Klemmring 14 lediglich Radialkräfte, denen der Klemmring 14 aufgrund seiner Eigenstabilität widersteht. Axialkräfte, die dazu neigen, den Klemmring 14 von dem Haltesteg 13 wegzudrücken, wirken dagegen nicht oder nur im geringem Maße auf den Klemmring 14, so daß dieser ohne aufwendige Befestigungsmittel, bspw. durch einen Klippverschluß, an dem Haltesteg 13 befestigt werden kann. Ein Herausrutschen des Randwulstes 9 aus der Nut 10 des Grundkörpers 4 wird dadurch zuverlässig verhindert, so daß auch bei hohem Abpreßdruck eine Abdichtung zwischen der Preßmembran 5 und dem Grundkörper 4 der Filterplatte 1 gewährleistet ist.

Bei der in Fig. 1 dargestellten Ausführungsform des Klemmrings 14 ist eine Anlagefläche 16 des Klemmrings 14 an dem Randwulst 9 im wesentlichen senkrecht zu der Mittelebene M der Filterplatte 1 angeordnet, so daß gewährleistet ist, daß bei einem Aufblähen der Preßmembran 5 unter Abpreßdruck die über den Umlenkbereich 12 gedehnte Preßmembran 5 lediglich in Radialrichtung auf den Klemmring 14 drückt.

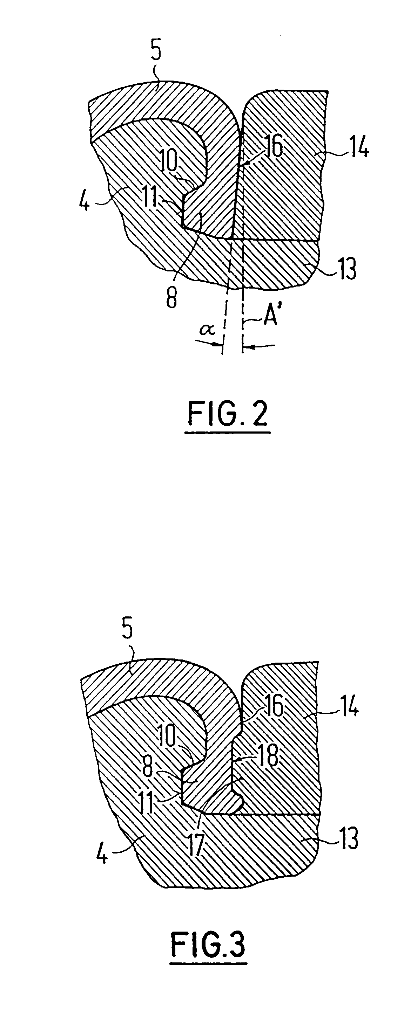

Bei der in Fig. 2 dargestellten Ausführungsform weist die Anlagefläche 16 des Klemmrings 14 eine leichte spitzwinklige Neigung zur Plattenebene M hin auf. Der Neigungswinkel α der Anlagefläche 16 gegenüber der Achse A der Durchtrittsöffnung 2 sollte, um eine Abdichtung zu gewährleisten, kleiner als 10° sein und kann bspw. 4° betragen. Zur Verdeutlichung der Neigung ist in Fig. 2 eine zur Achse A der Durchtrittsöffnung 2 parallele Achse A' eingezeichnet. Bei dieser Ausführungsform kann der Umlenkbereich 12 in dem an die Nut 9 angrenzenden Bereich eine etwa der Neigung der Anlagefläche 16 des Klemmrings 14 entsprechende Neigung aufweisen. Dadurch wird eine weichere Kraftübertragung im Gummi der Preßmembran 5 ermöglicht, die die Gefahr des Reißens der Preßmembran 5 bei großen Dehnungen verringert.

Bei einer weiteren, in Fig. 3 dargestellten Ausführungsform ist an der Anlagefläche 16 des Klemmrings 14 ein umlaufender Vorsprung 17 ausgebildet, der in eine entsprechende Ausnehmung 18 in dem Randwulst 9 der Preßmembran 5 eingreift. Durch diesen Vorsprung 17 wird der Klemmring 14 axial gehalten, so daß auf zusätzliche Befestigungmittel verzichtet werden kann.

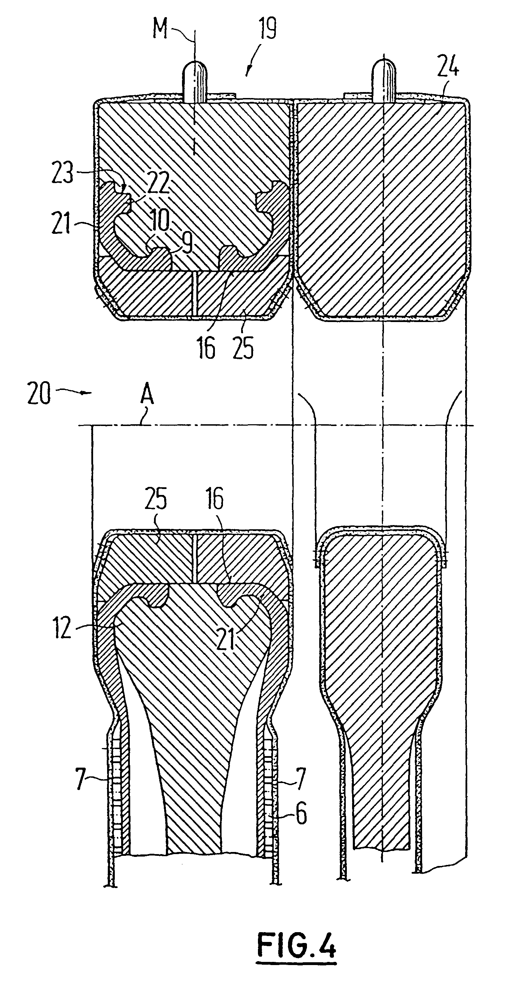

In Fig. 4 ist ausschnittsweise eine Eckeinlauf-Membranplatte 19 dargestellt,, bei der eine Durchtrittsöffnung 20 nicht mittig in der Membranplatte 19, sondern in einem Randbereich derselben vorgesehen ist. Eine Preßmembran 21 wird an ihrem Rand durch einen Wulst 22 in einer Nut 23 der Membranplatte 19 gehalten und zusätzlich durch eine Kammerplatte 24 abgestützt, so daß der Wulst 22 der Membran 21 nicht aus der Nut 23 herausrutschen kann. Die Kammerplatte 24 hält gleichzeitig einen zweiteiligen Klemmring 25 in seiner axialen Position, so daß kein zusätzlicher Haltesteg an dem Grundkörper der Membranplatte 19 benötigt wird. Selbstverständlich läßt sich eine derartige Befestigung auch bei den in den Fig. 1 bis 3 dargestellten Klemmringen 14 der Filterplatte 1 verwenden. Da auf den Klemmring 14, 25 aber ohnehin keine axialen Kräfte wirken, kann auch gänzlich auf zusätzliche Befestigungsmittel für den Klemmmring 14, 25 verzichtet werden.

Durch die Vermeidung von auf den Klemmring 14, 25 wirkenden Axialkräften kann die Befestigung des Klemmrings 14, 25 an der Filterplatte 1, 19 wesentlich vereinfacht werden, so daß die Montage der Preßmembran 5, 21 an der Filterplatte beschleunigt wird. Gleichzeitig bleibt die Abdichtung der Preßmembran 5, 21 gegenüber dem Grundkörper 4 der Filterplatte 1, 19 auch bei hohen Abpreßdrücken gewährleistet.

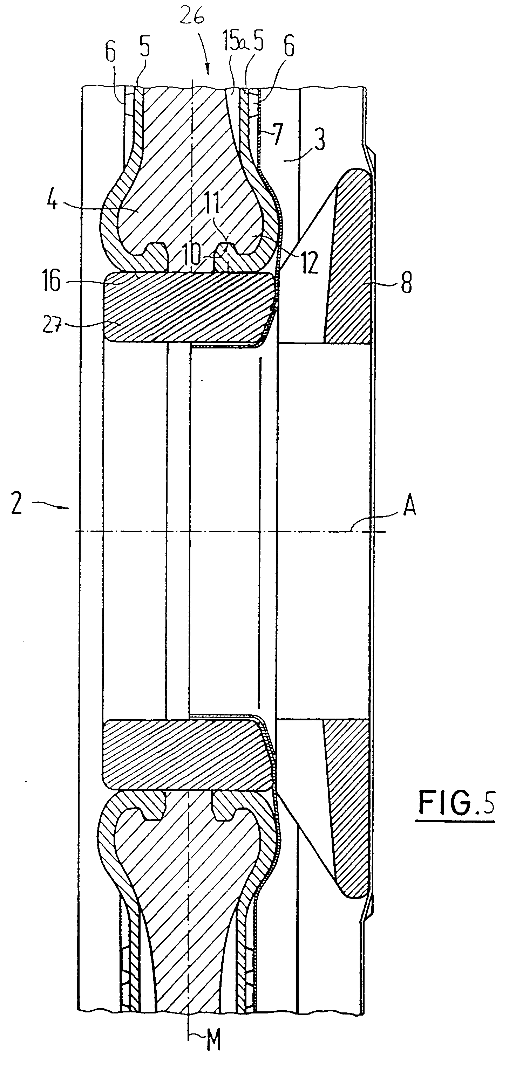

Durch die in Fig. 5 dargestellte Ausführungsform wird die Montage der Membran noch weiter vereinfacht. Eine Membranplatte 26 weist hierbei keinen Haltesteg für die Befestigung eines Klemmrings 27 auf. Dieser ist vielmehr als durchgehendes Rohr aus Stahl oder Polypropylen ausgebildet. Somit ist keine Verschraubung zweier Klemmringe oder Klemmringelemente mehr notwendig, so daß die Montage wesentlich vereinfacht wird. Durch Verzicht auf die Verschraubung entfallen auch die wesentlichen korrosionsanfälligen Elemente. Da auf den Klemmring 27 keine axialen Kräfte wirken, ist eine zusätzliche Befestigung in Axialrichtung nicht erforderlich. Er wird durch die Haftung und Reibung an der Membran 5 in ausreichendem Maße gehalten.

### Bezugszeichenliste

- 1: Filterplatte
- 2: Durchtrittsöffnung
- 3: Filterkammer
- 4: Grundkörper
- 5: Preßmembran
- 6: Noppen
- 7: Filtertuch
- 8: Flansch
- 9: Randwulst
- 10: Nut
- 11: Grundfläche
- 12: Umlenkbereich
- 13: Haltesteg
- 14: Klemmring
- 15: O-Ring
- 15a: Raum
- 16: Anlagefläche
- 17: Vorsprung
- 18: Ausnehmung
- 19: Membranplatte
- 20: Durchtrittsöffnung
- 21: Preßmembran
- 22: Wulst
- 23: Nut
- 24: Kammerplatte
- 25: Klemmring
- 26: Membranplatte
- 27: Klemmring

- A, A': Achse
- M: Plattenmittelebene
- α: Neigungswinkel

## Patentansprüche

1. Filterplatte für eine Plattenfilterpresse mit wenigstens einer mit Filtertuch (7) abgedeckten Preßmembran (5, 21), bei der die Filterplatte (1, 19, 26) und die Preßmembran (5, 21) wenigstens eine gemeinsame Durchtrittsöffnung (2, 20) aufweisen, wobei der Rand der Durchtrittsöffnung (2, 20) der Preßmembran (5, 21) mit einem umlaufenden Randwulst (9) versehen ist, der in einer Nut (10) am Rand der Durchtrittsöffnung (2, 20) der Filterplatte (1, 19, 26) durch einen Klemmring (14, 25, 27) gehalten wird, wobei die Halterung der Preßmembran (5, 21) über eine Klemmfläche (16) des Klemmrings (14, 25) erfolgt, **dadurch gekennzeichnet**, daß die Klemmfläche (16) des Klemmrings (14, 25, 27) an dem Randwulst (9) im wesentlichen senkrecht zur Mittelebene (M) der Filterplatte (1, 19, 26) verläuft oder derart spitzwinklig zur Plattenmittelebene (M) geneigt ist, daß der am weitesten von der Plattenmittelebene (M) entfernte Punkt der Klemmfläche (16) der Achse (A) der Durchtrittsöffnung (2, 20) am nächsten liegt.

2. Filterplatte nach Anspruch 1, **dadurch gekennzeichnet**, daß die Neigung (α) der Klemmfläche (16) relativ zur Achse (A) höchstens 10°, vorzugsweise höchstens 5° beträgt.

3. Filterplatte nach Anspruch 1 oder 2, **dadurch gekennzeichnet**, daß an der Anlagefläche (16) des Klemmrings (14, 25, 27) ein vorzugsweise umlaufender Vorsprung (17) ausgebildet ist, der in eine entsprechende Ausnehmung (18) in dem Randwulst (9) der Preßmembran (5, 21) eingreift.

4. Filterplatte nach einem der Ansprüche 1 bis 3, **dadurch gekennzeichnet,** daß die den Randwulst (9) aufnehmende Nut (10) in der Filterplatte (1, 19, 26) trapezförmig ausgebildet ist, wobei eine Grundfläche (11) der Nut (10) im wesentlichen parallel zu Achse (A) der Durchtrittsöffnung (2, 20) verläuft.

5. Filterplatte nach einem der Ansprüche 1 bis 4, **dadurch gekennzeichnet**, daß an der Filterplatte (1) im Bereich ihrer Mittelebene (M) ein die Nut (10) zur Mitte der Durchtrittsöffnung (2) hin überragender umlaufender Haltesteg (13) vorgesehen ist, an dem der Klemmring (14) befestigbar ist.

6. Filterplatte nach einem der Ansprüche 1 bis 5, **dadurch gekennzeichnet**, daß der Klemmring (14, 25) mittels eines Klippverschlusses an der Filterplatte (1, 19) befestigbar ist.

7. Filterplatte nach den Ansprüchen 1 bis 4, **dadurch gekennzeichnet**, daß der Klemmring (27) als durchgehendes Rohr ausgebildet ist.

8. Filterplatte nach einem der Ansprüche 1 bis 7, **dadurch gekennzeichnet**, daß der Klemmring (14, 25, 27) aus Kunststoff, bspw. Polypropylen besteht.

## Claims

1. A filter plate for a plate filter press having at least one pressure diaphragm (5, 21) covered by a filter cloth (7), in which the filter plate (1, 19, 26) and the pressure diaphragm (5, 21) have at least one common through-opening (2, 20), the edge of the through-opening (2, 20) in the pressure diaphragm (5, 21) being provided with a peripheral bead (9) which is held in a groove (10) at the edge of the through-opening (2, 20) in the filter plate (1, 19, 26) by means of a clamping ring (14, 25, 27), the pressure diaphragm (5, 21) being held by way of a clamping face (16) of the clamping ring (14, 25), characterized in that the clamping face (16) of the clamping ring (14, 25, 27) extends along the bead (9) substantially perpendicularly with respect to the centre plane (M) of the filter plate (1, 19, 26), or is inclined at an acute angle with respect to the centre plane (M) of the plate such that that point of the clamping face (16) which is furthest away from the centre plane (M) of the plate is closest to the axis (A) of the through-opening (2, 20).

2. A filter plate according to Claim 1, characterized in that the inclination (α) of the clamping face (16) relative to the axis (A) is no greater than 10°, preferably no greater than 5°.

3. A filter plate according to Claim 1 or 2, characterized in that a preferably peripheral projection (17) is constructed on the contact surface (16) of the clamping ring (14, 25, 27) and engages in a corresponding recess (18) in the bead (9) on the pressure diaphragm (5, 21).

4. A filter plate according to one of Claims 1 to 3, characterized in that the groove (10), receiving the bead (9), in the filter plate (1, 19, 26) is of a trapezoidal construction, a base surface (11) of the groove (10) extending substantially parallel to the axis (A) of the through-opening (2, 20).

5. A filter plate according to one of Claims 1 to 4, characterized in that a peripheral holding web (13) reaching over the groove (10) towards the centre of the through-opening (2) is provided on the filter plate (1) in the region of its centre plane (M) and may have the clamping ring (14) attached to it.

6. A filter plate according to one of Claims 1 to 5, characterized in that the clamping ring (14, 25) may be attached to the filter plate (1, 19) by means of a clip-type closure.

7. A filter plate according to Claims 1 to 4, characterized in that the clamping ring (27) is constructed as a continuous tube.

8. A filter plate according to one of Claims 1 to 7, characterized in that the clamping ring (14, 25, 27) is made of plastics material, for example polypropylene.

## Revendications

1. Plaque de filtration pour un filtre-presse à plaques avec au moins une membrane de presse (5, 21) recouverte d'un tissu filtrant (7), dans laquelle la plaque de filtration (1, 19, 26) et la membrane de presse (5, 21) présentent au moins une ouverture de pénétration (2, 20) commune, le bord de l'ouverture de pénétration (2, 20) de la membrane de presse (5, 21) étant muni d'un bourrelet périphérique (9) circulaire qui est maintenu par une rondelle de serrage (14, 25, 27) dans une gorge (10) au bord de l'ouverture de pénétration (2, 20) de la plaque de filtration (1, 19, 26), la fixation de la membrane de presse (5, 21) étant assurée par une surface de serrage (16) de la rondelle de serrage (14, 25), **caractérisée en ce que** la surface de serrage (16) de la rondelle de serrage (14, 25, 27) au niveau du bourrelet périphérique (9) est essentiellement perpendiculaire au plan médian (M) de la plaque de filtration (1, 19, 26) ou est inclinée d'un angle aigu par rapport au plan médian (M) de la plaque de telle sorte que le point de la surface de serrage (16) le plus éloigné du plan médian (M) de la plaque est le plus proche de l'axe (A) de l'ouverture de pénétration (2, 20).

2. Plaque de filtration selon la revendication 1, **caractérisée en ce que** l'angle (α) entre la surface de serrage (16) et l'axe (A) ne dépasse pas 10°, préférentiellement ne dépasse pas 5°.

3. Plaque de filtration selon la revendication 1 ou 2, **caractérisée en ce qu**'une saillie (17) préférentiellement circulaire est formée à la surface de serrage (16) de la rondelle de serrage (14, 25, 27), ladite saillie s'engageant dans un évidement correspondant (18) dans le bourrelet périphérique (9) de la membrane de presse (5, 21).

4. Plaque de filtration selon l'une des revendications 1 à 3, **caractérisée en ce que** la gorge (10) recevant le bourrelet périphérique (9) dans la plaque de filtration (1, 19, 26) est de forme trapézoïdale, la base (11) de la gorge (10) étant essentiellement parallèle à l'axe (A) de l'ouverture de pénétration (2, 20).

5. Plaque de filtration selon l'une des revendications 1 à 4, **caractérisée en ce qu**'il est prévu sur la plaque de filtration (1) au niveau de son plan médian (M) une entretoise (13) circulaire saillant par rapport à la gorge (10) en direction du milieu de l'ouverture de pénétration (2) et sur laquelle peut être fixée la rondelle de serrage (14).

6. Plaque de filtration selon l'une des revendications 1 à 5, **caractérisée en ce que** la rondelle de serrage (14, 25) peut être fixée sur la plaque de filtration (1, 19) au moyen d'une fermeture par clip.

7. Plaque de filtration selon l'une des revendications 1 à 4, **caractérisée en ce que** la rondelle de serrage (27) a la forme d'un tube continu.

8. Plaque de filtration selon l'une des revendications 1 à 7, **caractérisée en ce que** la rondelle de serrage (14, 25, 27) est en matière plastique, par exemple en polypropylène.
